(19) **Europäisches Patentamt / European Patent Office / Office européen des brevets**

(11) **EP 4 603 869 A1**

(12) **EUROPEAN PATENT APPLICATION**

(43) Date of publication:
20.08.2025 Bulletin 2025/34

(21) Application number: 25156730.1

(22) Date of filing: 10.02.2025

(51) International Patent Classification (IPC):
G01S 7/481 (2006.01)      G01S 7/484 (2006.01)
G01S 7/4863 (2020.01)     G01S 7/4865 (2020.01)
G01S 7/497 (2006.01)      G01S 17/10 (2020.01)
G01S 17/894 (2020.01)

(52) Cooperative Patent Classification (CPC):
G01S 7/4815; G01S 7/4816; G01S 7/484;
G01S 7/4863; G01S 7/4865; G01S 7/497;
G01S 17/10; G01S 17/894

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.02.2024 US 202418440173

(71) Applicant: STMicroelectronics International N.V.
1228 Plan-les-Ouates, Geneva (CH)

(72) Inventors:
• MOORE, John Kevin
  EDINBURGH, EH13 0QF (GB)
• DUTTON, Neale
  EDINBURGH, EH10 6HA (GB)

(74) Representative: Casalonga
Casalonga & Partners
Bayerstraße 71/73
80335 München (DE)

(54) **TIME OF FLIGHT PROCESS MONITORING**

(57) A time-of-flight (TOF) system includes a driver driving a VCSEL-array to emit light, a reference array receiving a reference light-signal, and a return array receiving emitted light that reflects off a target. Reference readout circuitry reads out the reference array. Return readout circuitry reads out the return array. A first buffer-driver buffers a base timing-reference to produce a first timing-reference. A second buffer-driver buffers the first timing-reference to produce a second timing-reference. Calibration circuitry takes a first TOF-measurement using the return readout circuitry when it is clocked by the first timing-reference, takes a second time of flight measurement using the return readout circuitry when it is clocked by the second timing-reference, and compensates for an offset between TOF taken by the return readout circuitry and the reference readout circuitry during normal operation based on the first and second TOF-measurements.

FIG. 2

**Description**

TECHNICAL FIELD

This disclosure is related to the field of optical sensing and, in particular, to the monitoring of response times of reference and return Single-Photon Avalanche Diode (SPAD) arrays in Time-of-Flight (TOF) sensors.

BACKGROUND

Time-of-Flight (TOF) sensors are components utilized within various advanced technologies, playing a role in accurately measuring distances to targets. Applications for such TOF sensors span across multiple technical areas, including autonomous navigation for vehicles and drones, 3D mapping and imaging, virtual and augmented reality systems, gesture recognition in consumer electronics, and facial recognition in consumer electronics.

Direct Time-of-Flight (dTOF) sensors and Indirect Time-of-Flight (iTOF) sensors are two variants of TOF technology. A dTOF sensor works by emitting a short pulse of light towards a target and measuring the time it takes for the light to reflect off the target and return to the sensor. This approach yields an accurate measure of the distance to the target. On the other hand, an iTOF sensor operates by emitting a continuous wave of modulated light and measuring the phase shift between the emitted and the reflected light waves. While iTOF sensors can also calculate distances, they are typically less accurate than dTOF sensors for precise measurements, particularly over longer distances or in brightly lit environments. However, iTOF sensors tend to be more power-efficient and cheaper to produce, making them more desirable for certain applications such as arrays with high resolution such as VGA.

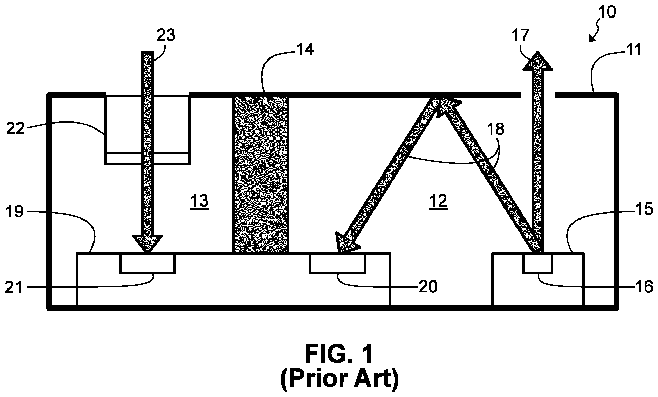

A dTOF sensor 10 is now described with reference to FIG. 1. The dTOF sensor 10 is embodied within a housing 11 that is partitioned into two chambers separated by an optical barrier 14: an outgoing signal chamber 12 and an incoming signal chamber 13.

Within the outgoing signal chamber 12, a Vertical-Cavity Surface-Emitting Laser (VCSEL) substrate 15 houses the VCSEL 16. The majority of the infrared laser beam produced by the VCSEL 16 forms an outgoing beam 17 directed towards a target object, while a portion of the infrared laser beam produced by the VCSEL 16 bounces off the interior of the housing 11 to form a reference beam 18. The reference laser beam 18 reflects off the interior of the housing 11 within the outgoing signal chamber 12 to strike a reference array of Single-Photon Avalanche Diodes (SPADs) 20, embedded within a substrate 19. These reference SPADs 20 detect the arrival of the reference beam 18, establishing a reference time-of-flight value. The optical barrier 14 prevents the outgoing beam 17 and reference beam 18 from reaching the incoming signal chamber 13.

The incoming signal chamber 13 houses an Infrared (IR) notch filter 22, which reduces the amount of ambient light which reaches a return array 21. Once through the IR notch filter 22, the return beam 23 strikes the return array of SPADs 21, also embedded within the substrate 19.

The operation of the dTOF sensor 10 involves a comparison of the time between the reference beam 18 striking the reference array of SPADs 20 and the outgoing beam 17 reaching the target, reflecting back, passing through the IR notch filter 22, and striking the return array of SPADs 21. This time duration is then converted to a distance based on the speed of light, which is constant.

Inherent in the operation of the time-of-flight calculation lies a potential challenge, namely the variability in response times of both the reference array of SPADs 20 and the return array 21. Once an incoming photon strikes a SPAD, it triggers the initiation of an avalanche breakdown, the generation of an electrical pulse, the detection of this pulse, and finally, the propagation of this signal through the readout circuitry, the output of which provides information on the phase difference between a timing reference and detections coming from the SPADs. These steps form the response time of a SPAD, with it being noted that delays resulting from the generation and propagation of the timing reference also form part of the response time.

This response time is, however, subject to potential variations, which can be due to process, voltage, and/or temperature changes within the SPADs. These fluctuations can inadvertently introduce discrepancies in the measured time of flight to the object (and discrepancies in the response time of the reference array). Note that this potential measurement error could be present even when the distance to the target object remains constant because such measurement errors may present a fixed error applied to the TOF measurement regardless of the distance to the target. This measurement error or offset may change with process, voltage, or temperature.

Consider a scenario where the response time of the reference array 20 increases, while the response time of the return array 21 stays the same. In this case, even though the actual time of flight (from the VCSEL 16 to the object and back to the return array 21) has not changed, the differential time of flight (between the return and reference arrays) that the sensor 10 measures will decrease due to the increase in response time of the reference array 20. This is an offset that represents the variability in response time and presents a risk of undermining the accuracy of the distance measurements, a challenge that needs to be addressed to ensure consistent and reliable performance of the dTOF sensor 10.

A common approach to addressing the variability in response times of dTOF sensors is the use of digital calibration. When a delay or mismatch in delay is identified, it can be digitally compensated. This process involves adjusting the measured range by subtracting a known offset, formulated as: Range_calibrated = Range_measured - Offset. However, this solution is not without its limitations.

One drawback of digital calibration is the non-static nature of the offset. The offset can vary due to several factors. For example, the offset may change due to variations in the manufacturing process. Although these variations can be identified through testing on a per-die or per-wafer basis, it adds complexity and cost to the sensor manufacturing process.

On-chip temperature sensors can measure temperature fluctuations, which affect the sensor's performance, however, the variation gradient is influenced by process corners, making the compensation of offset for these variations challenging. This complexity arises because different manufacturing processes can result in sensors with different temperature sensitivities.

Voltage fluctuations are particularly troublesome, as they are not only difficult to compensate for but can also occur abruptly and briefly during operation, especially while performing range measurement. This transient nature of voltage changes makes it hard to apply a consistent and accurate compensation to offset.

To further refine the accuracy of dTOF sensors, some prior efforts have utilized a process monitoring block. This block monitors specific parameters related to the manufacturing process, such as threshold voltage (Vt) and drive current (Ion). When combined with a temperature sensor and an Analog-to-Digital Converter (ADC) to determine the supply voltage, a PMB provides additional data that can help in tuning the compensation applied to the sensor's measurements. However, this approach also encounters practical difficulties. Determining the required offsets against discrete and limited information about the process, voltage, and temperature is complex and can be resource intensive. Moreover, the PMB itself adds to complexity and cost, potentially impacting its viability for certain applications.

As such, further development is needed.

SUMMARY

Disclosed herein is a time-of-flight (TOF) system, including: an array of vertical-cavity surface-emitting lasers (VCSELs); a VCSEL driver configured to drive the VCSEL array during operation to emit light toward a target; a reference single-photon avalanche diode (SPAD) array positioned to receive a reference light signal; a return SPAD array positioned to receive portions of the light emitted by the array of VCSELs that reflect off the target; reference readout circuitry configured to read out signals from the reference SPAD array; return readout circuitry configured to read out signals from the return array; a timing generator configured to generate a base timing reference; first buffer driver circuitry configured to buffer the base timing reference to produce a first timing reference; second buffer driver circuitry configured to buffer the first timing reference to produce a second timing reference; third buffer driver circuitry configured to buffer the base timing reference to produce a third timing reference to clock the return readout circuitry; and calibration circuitry configured to take a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

The calibration circuitry may compensate for the offset between time of flight measurements taken by the return readout circuitry and the reference readout circuitry during normal operation as a function of the first time of flight measurement, the second time of flight measurement, a number of delay causing elements within the second buffer driver circuitry, and a difference between a number of delay causing elements within the first buffer driver circuitry and a number of delay causing elements within the third buffer driver circuitry.

The offset in making the time of flight measurements taken by the reference readout circuitry may be compensated for as:

$$TOF = TOF1 - \frac{TOF2 - TOF1}{(N + M)/N}$$

where *TOF* is a time of flight measurement taken by the reference readout circuitry during normal operation, TOF1 is the first time of flight measurement, *TOF2* is the second time of flight measurement, N is the difference between the number of delay causing elements within the first buffer driver circuitry and the number of delay causing elements within the third buffer driver circuitry, and M is the number of delay causing elements within the second buffer driver circuitry.

The calibration circuitry may be configured to calculate the offset as a function of the difference between the second and first time of flight measurements.

The calibration circuitry may calculate the offset as a function of the difference between the second and first time of flight measurements and applies a scaling factor based on the number of delay causing elements within the second buffer driver circuitry relative to the difference in the number of delay causing elements within the first and third buffer driver circuitry.

The first buffer driver circuitry may include a different number of buffer elements than the second buffer driver circuitry, such that the second timing reference is delayed relative to the first timing reference.

The delay introduced by the buffer elements in the second buffer driver circuitry may be used by the calibration circuitry to determine the offset.

The calibration circuitry may be configured to calculate the offset as a function of the difference between the second and first time of flight measurements. The timing generator may be further configured to generate a trigger signal. A fourth buffer driver circuitry may be configured to buffer the trigger signal to generate a drive signal for the VCSEL driver. The delay introduced by the buffer elements in the second buffer driver circuitry may be used by the calibration circuitry to determine a delay between generation of the trigger signal and generation of the drive signal for the VCSEL driver.

The calibration circuitry may be configured to calculate the offset as a function of the difference between the second and first time of flight measurements. The timing generator may be further configured to generate a trigger signal; further comprising fourth buffer driver circuitry configured to buffer the trigger signal to generate a drive signal for the VCSEL driver. The calibration circuitry may be further configured to determine a delay between generation of the trigger signal and generation of the drive signal for the VCSEL driver based on the first time of flight measurement and the second time of flight measurement.

The third buffer driver circuitry may have fewer delay causing elements than the first buffer driver circuitry.

The delay causing elements of the first driver circuitry, the delay causing elements in the third buffer driver circuitry, and delay causing elements in the second buffer circuitry may be matched.

The calibration circuitry may include a multiplexer configured to selectively pass either the first timing reference or the second timing reference to the return readout circuitry based on a control signal from the calibration circuitry.

The calibration circuitry may be further configured to perform the first and second time of flight measurements during a calibration phase that precedes normal operation of the TOF system.

The return readout circuitry may include first return readout circuitry used by the calibration circuitry to take the first time of flight measurement and used by control circuitry to take time of flight measurements of the reference readout circuitry during normal operation, and second return circuitry used by the calibration circuitry to take the second time of flight measurement.

The reference light signal may be formed by portions of light that reflect off an interior of a housing of the TOF system.

Methods aspects are also included. For example, disclosed herein is a method for calibrating a time-of-flight (TOF) system in a calibration phase, the method including: emitting light toward a target; receiving a reference light signal at a reference array; receiving light that reflects off the target at a return array; reading out the reference light signal using reference readout circuitry; reading out signals from the return array using return readout circuitry; generating a base timing reference with a timing generator; applying a first time delay to the base timing reference to produce a first timing reference; applying a second time delay to the first timing reference to produce a second timing reference; applying a third time delay to the base timing reference to produce a third timing reference to clock the return readout circuitry; taking a first time of flight measurement using the return readout circuitry when clocked by the first timing reference; taking a second time of flight measurement using the return readout circuitry when clocked by the second timing reference; and taking a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

The offset between time of flight measurements taken by the return readout circuitry and the reference readout circuitry may be determined during normal operation as a function of the first time of flight measurement, the second time of flight measurement, a number of delay causing elements within second buffer driver circuitry that applies the second time delay, and a difference between a number of delay causing elements within first buffer driver circuitry that applies the first time delay and a number of delay causing elements within third buffer driver circuitry that applies the third time delay.

The method may further include compensating for the offset in time of flight measurements taken by the reference readout circuitry during normal operation as:

$$TOF = TOF1 - \frac{TOF2 - TOF1}{(N + M)/N}$$

where *TOF* represents a time of flight measurement taken by the reference readout circuitry during normal operation,

*TOF*1 is the first time of flight measurement, *TOF*2 is the second time of flight measurement, N is the difference between the number of delay causing elements within the first buffer driver circuitry and the third buffer driver circuitry, and M is the number of delay causing elements within the second buffer driver circuitry.

Calculating the offset may include applying a scaling factor based on the number of delay causing elements within the second buffer driver circuitry relative to the difference in the number of delay causing elements within the first and third buffer driver circuitries.

The first buffer driver circuitry may include a different number of buffer elements than the second buffer driver circuitry, and the method may further include utilizing the delay introduced by the buffer elements in the second buffer driver circuitry to determine the offset.

The method may also include generating a trigger signal with the timing generator and buffering the trigger signal with fourth buffer driver circuitry to generate a drive signal for a VCSEL driver that drives an array of VCSELs to emit light toward the target, wherein the delay introduced by the buffer elements in the second buffer driver circuitry is used to determine a delay between the generation of the trigger signal and the drive signal for the VCSEL driver.

The calibration phase may include using a multiplexer to selectively pass either the first timing reference or the second timing reference to the return readout circuitry based on a control signal.

The calibration phase may be performed prior to normal operation of the TOF system and involves using first return readout circuitry to take the first time of flight measurement and second return readout circuitry to take the second time of flight measurement.

BRIEF DESCRIPTION OF THE DRAWINGS

FIG. 1 is a diagram of a known time-of-flight sensor.
FIG. 2 is a block diagram of a time-of-flight system disclosed herein.
FIG. 3 is a block diagram of an alternative embodiment of the time-of-flight system disclosed herein.

DETAILED DESCRIPTION

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

First, an example specific TOF system will be described to give an example of a particular implementation, and, thereafter, a genericized version will be described to provide for a full understanding of the scope of applications in which the response time monitoring circuitry disclosed herein may be utilized.

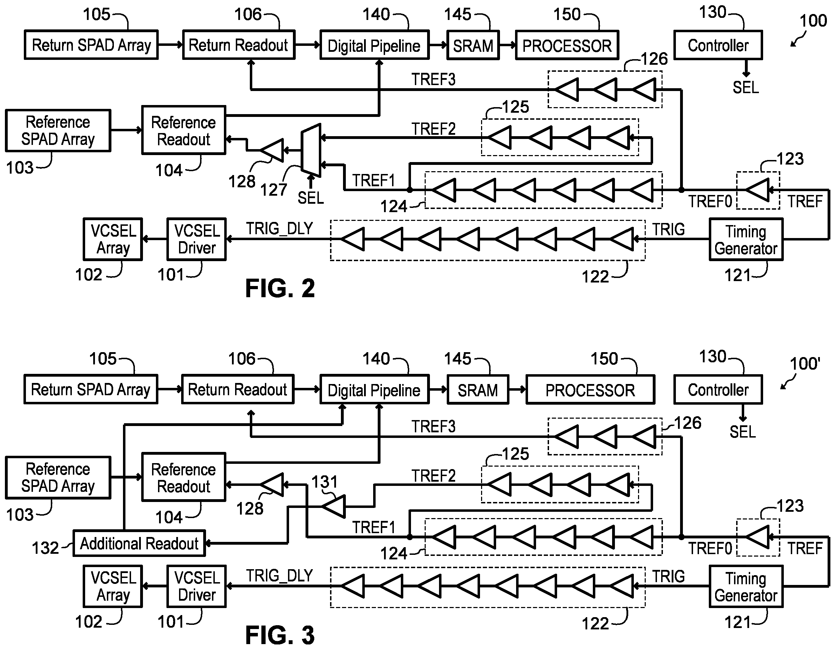

The TOF system 100 is now described with reference to FIG. 2. The TOF system 100 includes an array of VCSELs 102 driven by a driver circuit 101 during operation to emit pulses of light toward a target, a reference SPAD array 103, and a return SPAD array 105. The reference array 103 and return array 105 are carried within a housing, with the reference array 103 receiving the portions of the light that bounce off the interior of the housing and the return array 105 receiving the portions of the light that bounce off the target and return. Reference readout circuitry 104 reads out the signals from the reference array 103. Return readout circuitry 106 reads out the signals from the return array 105.

The return readout circuitry 106 receives the outputs of the SPADs of the return array 105, reads out those outputs (e.g., through an OR tree, an asynchronous front end, and a digital readout), and provides the results to a finite state machine and digital pipeline 140 that, for example, may implement a finite state machine. The digital pipeline 140 is connected to receive the outputs of the return readout circuitry 106 as well as the outputs of the reference readout circuitry 104, and the output of the digital pipeline 140 is stored in an SRAM 145. The digital pipeline 140 performs the time of flight measurement based upon the outputs of the return readout circuitry 106 and reference readout circuitry 104.

The driver circuit 101, reference readout circuitry 104, and return readout circuitry 106 are clocked by clock signals generated by a timing generator 121, such as a phase locked loop (PLL).

In particular, the timing generator 121 generates a trigger signal TRIG, which is passed to buffer driver 122. The buffer driver 122, as illustrated, includes eight buffers configured to apply a timing delay to the trigger signal TRIG, and generates a VCSEL driver signal TRIG_DLY for triggering the driver circuit 101. Note here that the VCSEL driver signal TRIG_DLY is delayed with respect to the trigger signal TRIG as a result of the action of the buffer driver 122.

The timing generator 121 also generates a timing reference TREF, which is passed to buffer driver 123. The buffer driver 123, as illustrated, includes a single buffer, and generates a pre-timing reference signal TREFO, to be passed to buffer drivers 124 and 126. Buffer driver 124, as illustrated, includes six buffers configured to apply a timing delay to the pre-timing reference signal TREFO, produces a first timing reference signal TREF1 at its output and provides this first timing reference signal to a first input of the multiplexer 127. A buffer driver 125, as illustrated, includes four buffers configured to apply a timing delay to the first timing reference signal TREF1, receives the first timing reference signal TREF1 at its input, and produces a second timing reference signal TREF2 at its output. The buffer driver 125 provides this second timing reference signal TREF2 to a second input of the multiplexer 127. Buffer driver 126, as illustrated, includes three buffers configured to apply a timing delay to the pre-timing reference signal TREFO, produces a third timing reference signal TREF3 at its output and provides this third timing reference signal TREF3 to the return readout circuitry 106.

Note here that the first timing reference signal TREF1 is delayed with respect to the timing reference signal TREF0 as a result of the action of the buffer driver 124, the second timing reference signal TREF2 is delayed with respect to the first timing reference signal TREF1 as a result of the action of the buffer driver 125, and the third timing reference signal TREF3 is delayed with respect to the timing reference signal TREF0 as a result of the action of the buffer driver 126.

The output of the multiplexer 127 is a selected one of the TREF1 and TRFE2 signals which is passed through buffer driver 128 and provides the clock signal for use by the reference readout circuitry 104, with the selection of which input of the multiplexer 127 for the TREF1 and TRFE2 signals to pass to the output being made in response to the selection signal SEL generated by a controller 130. The return readout circuitry 106 is clocked by the third timing reference signal TREF3.

Utilizing the additional delay provided by the buffer driver 125, a calibration process is performed by the controller 130 in order to determine the delay between edges of the timing reference signal TREF0 and the timing reference signal TREF1. This calibration process exploits the difference in TOF measurements between the signal paths between the timing generator 121 and multiplexer 127 with and without the additional delay imposed by buffer driver 124. To that end, the selection signal SEL is set so that the multiplexer 127 selects TREF 1 for passage to the reference readout circuitry 104, then the TOF measurement along the reference path is taken (e.g., the time between assertion of the trigger signal TRIG by the timing generator 121 to initiate outgoing ranging light and readout of detected reflected light by the reference readout circuitry 104). Thereafter, the selection signal SEL is set so that the multiplexer 127 selects TREF2 for passage to the reference readout circuitry 104, then the TOF measurement along the reference path is taken again (e.g., the time between assertion of the trigger signal TRIG by the timing generator 121 and readout of detected reflected light by the reference readout circuitry 104 is taken again). From the difference between these two time measurements, the offset between the TOF measurements taken by the return readout circuitry 106 and reference readout circuitry 104 may be determined.

This is possible because buffer drivers 123, 124, 125, and 128 are constructed to match in polarity and capacitance. They are fabricated using the same metal layer, providing for uniformity in spacing and environmental factors. This fabrication provides for the delays between buffer drivers 122, 123, 124, 125, and 128 to be proportionally scalable so that the measured delay from buffer driver 125 can be reliably used to infer the delay through buffer driver 124.

The determination of the offset is now described. Consider that the delay through the path between the timing generator 121 and the return readout circuitry 106 (i.e., the return channel) is set by the delay of the buffer drivers 123 and 126, which collectively have four buffers. Consider that the delay through the path between the timing generator 121 and the reference readout circuitry 104 (i.e., the reference channel) is set by the delay of the buffer drivers 123, 124, and 128, which collectively have eight buffers. Therefore, the reference channel has N=4 extra buffers as compared to the return channel. Now observe that the buffer driver 125 has M=N=4 extra buffers.

Recall that the time of flight to an object in a scene can be measured by subtracting the TOF measurement of reference readout circuitry 104 from the TOF measurement from the return readout circuitry 106, and adding the offset to this. Mathematically, this can be written as:

$$TOF = TOF_{RETURN} - (TOF_{REFERENCE} + OFFSET_{TOTAL})$$

Keeping this in mind, the time of flight when the selection signal SEL is set so that the multiplexer 127 selects TREF1 for passage to the reference readout circuitry 104 can be calculated as:

$$TOF1 = TOF_{RETURN} - (TOF_{REFERENCE} + N \times OFFSET_{UNIT})$$

Here, the offset between the TOF measurements taken by the return readout circuitry 106 and reference readout circuitry 104 is caused by the N=4 extra buffers of the reference channel, and $OFFSET_{UNIT}$ is the delay of each buffer within both the reference channel and the return channel. Therefore:

$$TOF1 = TOF_{RETURN} - (TOF_{REFERENCE} + 4 \times OFFSET_{UNIT})$$

The time of flight when the selection signal SEL is set so that the multiplexer 127 selects TREF2 for passage to the reference readout circuitry 104 can be calculated as:

$$TOF2 = TOF_{RETURN} - (TOF_{REFERENCE} + (M + N) \times OFFSET_{UNIT})$$

Recall that the buffer driver 125 includes M=4 buffers. Therefore:

$$TOF2 = TOF_{RETURN} - (TOF_{REFERENCE} + (4 + 4) \times OFFSET_{UNIT})$$

$$TOF2 = TOF_{RETURN} - (TOF_{REFERENCE} + 8 \times OFFSET_{UNIT})$$

To cancel the offset therefore, the time of flight for the reference array can be calculated, during normal operation, as:

$$TOF = TOF1 - \frac{TOF2 - TOF1}{(N + M)/N}$$

Recalling that M=4 and N=4, the offset for the specific example of FIG. 2 can be therefore calculated by the controller 130 as:

$$TOF = TOF1 - \frac{TOF2 - TOF1}{(4 + 4)/4}$$

$$TOF = TOF1 - \frac{TOF2 - TOF1}{8/4}$$

$$TOF = TOF1 - \frac{TOF2 - TOF1}{2}$$

Another technique for determining offset is also enabled through the use of the TOF system 100. Consider that using just the time of flight measurement $TOF_{REFERENCE}$ obtained from the reference readout circuitry 104, the delay of the buffer driver 125 can be calculated as:

$$DELAY = TOF_{REFERENCE} - TOF_{REFERENCE}$$

In this calculation, $TOF_{REFERENCE1}$ is the reference time of flight measurement taken when the selection signal SEL is set so that the multiplexer 127 selects TREF1 for passage to the reference readout circuitry 104, and $TOF_{REFERENCE2}$ is the reference time of flight measurement taken when the selection signal SEL is set so that the multiplexer 127 selects TREF2 for passage to the reference readout circuitry 104.

With this delay $DELAY$ being known therefore, and representing the total offset $OFFSET_{TOTAL}$, the time of flight to an object in the scene during operation could instead be calculated by the controller 130 as:

$$TOF = TOF_{RETURN} - (TOF_{REFERENCE} + DELAY)$$

In addition, using the known delay, and assuming the buffers within buffer driver 122 are matched to the buffers within buffer drivers 124 and 125, the delay between edges of the trigger signal TRIG and VCSEL driver signal TRIG_DLY may be calculated as the product of DELAY and a ratio between the number of buffers within buffer driver 122 to the number of buffers within buffer driver 125. Mathematically, this is represented as:

$$DEAY_{122} = DELAY \times \frac{NUMBER\ OF\ BUFFERS\ IN\ 122}{NUMBER\ OF\ BUFFERS\ IN\ 125}$$

Thus, as an example, if the buffer driver 122 includes eight buffers, then the delay $DEAY_{122}$ through buffer driver 122 is $2 \times DELAY$. This may be further utilized by the controller 130 in calculating the time of flight to an object in the scene.
In the above examples, due to the use of the multiplexer 127, the determination of offset and the delay between edges of the trigger signal TRIG and VCSEL driver signal TRIG_DLY is performed in a separate calibration phase separate from normal operation of the TOF system 100.

As an alternative, as shown in the TOF system 100' of FIG. 3, the output of the buffer driver 124 may be directly connected to the reference readout circuitry 104 through buffer driver 128, and the output of the buffer driver 125 may be connected to a replica readout 132 through buffer 131. The buffer 131 is a replica of buffer driver 128, and the replica readout 132 is a replica of the reference readout circuitry 104. Therefore, in this embodiment, the controller 130 may continuously or periodically perform the above described calibrations in the background during normal operation of the TOF system 100.

In conclusion, the TOF systems 100, 100' disclosed herein offer significant advancements in timing precision and operational reliability. One of the particularly helpful advantages of this system is its absolute timing accuracy, which remains consistent across a range of voltages and temperatures. This robustness enables the system to perform with a high degree of accuracy in a variety of applications and environments, where fluctuations in voltage and temperature might otherwise compromise accuracy. Furthermore, the TOF systems 100, 100' reduce the necessity for range offset trimming during testing, as the calibration described herein performs that function in situ. This reduction not only lowers test costs - contributing to lower production cost - but also simplifies the integration process into products, facilitating ease of adoption for manufacturers and end-users. Finally, it is evident that modifications and variations can be made to what has been described and illustrated herein without departing from the scope of this disclosure.

Example embodiments of the invention are summarized here. Other embodiments can also be understood from the entirety of the specification.

Example 1. A time-of-flight (TOF) system, comprising:

> an array of vertical-cavity surface-emitting lasers (VCSELs);
> a VCSEL driver configured to drive the VCSEL array during operation to emit light toward a target;
> a reference single-photon avalanche diode (SPAD) array positioned to receive a reference light signal;
> a return SPAD array positioned to receive portions of the light emitted by the array of VCSELs that reflect off the target;
> reference readout circuitry configured to read out signals from the reference SPAD array;
> return readout circuitry configured to read out signals from the return array;
> a timing generator configured to generate a base timing reference;
> first buffer driver circuitry configured to buffer the base timing reference to produce a first timing reference;
> second buffer driver circuitry configured to buffer the first timing reference to produce a second timing reference;
> third buffer driver circuitry configured to buffer the base timing reference to produce a third timing reference to clock the return readout circuitry; and
> calibration circuitry configured to take a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

Example 2. The TOF system of example 1, wherein the calibration circuitry compensates for the offset between time of flight measurements taken by the return readout circuitry and the reference readout circuitry during normal operation as a function of the first time of flight measurement, the second time of flight measurement, a number of delay causing elements within the second buffer driver circuitry, and a difference between a number of delay causing elements within the first buffer driver circuitry and a number of delay causing elements within the third buffer driver circuitry.

Example 3. The TOF system of claim 2, wherein the offset in making the time of flight measurements taken by the reference readout circuitry is compensated for as:

$$TOF = TOF1 - \frac{TOF2 - TOF1}{(N + M)/N}$$

where TOF is a time of flight measurement taken by the reference readout circuitry during normal operation, TOF 1 is the first time of flight measurement, TOF2 is the second time of flight measurement, N is the difference between the number of delay causing elements within the first buffer driver circuitry and the number of delay causing elements within the third buffer driver circuitry, and M is the number of delay causing elements within the second buffer driver circuitry.

Example 4. The TOF system of example 2, wherein the calibration circuitry is configured to calculate the offset as a function of the difference between the second and first time of flight measurements.

Example 5. The TOF system of example 4, wherein the calibration circuitry calculates the offset as a function of the difference between the second and first time of flight measurements and applies a scaling factor based on the number of delay causing elements within the second buffer driver circuitry relative to the difference in the number of delay causing elements within the first and third buffer driver circuitry.

Example 6. The TOF system of example 2, wherein the first buffer driver circuitry includes a different number of buffer elements than the second buffer driver circuitry, such that the second timing reference is delayed relative to the first timing reference.

Example 7. The TOF system of example 6, wherein the delay introduced by the buffer elements in the second buffer driver circuitry is used by the calibration circuitry to determine the offset.

Example 8. The TOF system of example 2, wherein the calibration circuitry is configured to calculate the offset as a function of the difference between the second and first time of flight measurements; wherein the timing generator is further configured to generate a trigger signal; further comprising fourth buffer driver circuitry configured to buffer the trigger signal to generate a drive signal for the VCSEL driver; and wherein the delay introduced by the buffer elements in the second buffer driver circuitry is used by the calibration circuitry to determine a delay between generation of the trigger signal and generation of the drive signal for the VCSEL driver.

Example 9. The TOF system of example 2, wherein the calibration circuitry is configured to calculate the offset as a function of the difference between the second and first time of flight measurements; wherein the timing generator is further configured to generate a trigger signal; further comprising fourth buffer driver circuitry configured to buffer the trigger signal to generate a drive signal for the VCSEL driver; and wherein the calibration circuitry is further configured to determine a delay between generation of the trigger signal and generation of the drive signal for the VCSEL driver based on the first time of flight measurement and the second time of flight measurement.

Example 10. The TOF system of example 1, wherein the third buffer driver circuitry has fewer delay causing elements than the first buffer driver circuitry.

Example 11. The TOF system of example 2, wherein the delay causing elements of the first driver circuitry, the delay causing elements in the third buffer driver circuitry, and delay causing elements in the second buffer circuitry are matched.

Example 12. The TOF system of example 1, wherein the calibration circuitry includes a multiplexer configured to selectively pass either the first timing reference or the second timing reference to the return readout circuitry based on a control signal from the calibration circuitry.

Example 13. The TOF system of example 1, wherein the calibration circuitry is further configured to perform the first and second time of flight measurements during a calibration phase that precedes normal operation of the TOF system.

Example 14. The TOF system of example 1, wherein the return readout circuitry includes first return readout circuitry used by the calibration circuitry to take the first time of flight measurement and used by control circuitry to take time of flight measurements of the reference readout circuitry during normal operation, and second return circuitry used by the calibration circuitry to take the second time of flight measurement.

Example 15. The TOF system of example 1, wherein the reference light signal is formed by portions of light that reflect off an interior of a housing of the TOF system.

Example 16. A method for calibrating a time-of-flight (TOF) system in a calibration phase, the method comprising:

emitting light toward a target;
receiving a reference light signal at a reference array;
receiving light that reflects off the target at a return array;
reading out the reference light signal using reference readout circuitry;
reading out signals from the return array using return readout circuitry;
generating a base timing reference with a timing generator;
applying a first time delay to the base timing reference to produce a first timing reference;
applying a second time delay to the first timing reference to produce a second timing reference;
applying a third time delay to the base timing reference to produce a third timing reference to clock the return readout circuitry;
taking a first time of flight measurement using the return readout circuitry when clocked by the first timing reference;
taking a second time of flight measurement using the return readout circuitry when clocked by the second timing reference; and
taking a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

Example 17. The method of example 16, wherein the offset between time of flight measurements taken by the return readout circuitry and the reference readout circuitry is determined during normal operation as a function of the first time of flight measurement, the second time of flight measurement, a number of delay causing elements within second buffer driver circuitry that applies the second time delay, and a difference between a number of delay causing elements within first buffer driver circuitry that applies the first time delay and a number of delay causing elements within third buffer driver circuitry that applies the third time delay.

Example 18. The method of example 17, further comprising compensating for the offset in time of flight measurements taken by the reference readout circuitry during normal operation as:

$$TOF = TOF1 - \frac{TOF2 - TOF1}{(N + M)/N}$$

where TOF represents a time of flight measurement taken by the reference readout circuitry during normal operation, TOF1 is the first time of flight measurement, TOF2 is the second time of flight measurement, N is the difference between the number of delay causing elements within the first buffer driver circuitry and the third buffer driver circuitry, and M is the number of delay causing elements within the second buffer driver circuitry.

Example 19. The method of example 17, wherein calculating the offset includes applying a scaling factor based on the number of delay causing elements within the second buffer driver circuitry relative to the difference in the number of delay causing elements within the first and third buffer driver circuitries.

Example 20. The method of example 17, wherein the first buffer driver circuitry includes a different number of buffer elements than the second buffer driver circuitry, and the method further comprises utilizing the delay introduced by the buffer elements in the second buffer driver circuitry to determine the offset.

Example 21. The method of example 20, further comprising generating a trigger signal with the timing generator and buffering the trigger signal with fourth buffer driver circuitry to generate a drive signal for a VCSEL driver that drives an array of VCSELs to emit light toward the target, wherein the delay introduced by the buffer elements in the second buffer driver circuitry is used to determine a delay between the generation of the trigger signal and the drive signal for the VCSEL driver.

Example 22. The method of example 16, wherein the calibration phase includes using a multiplexer to selectively pass either the first timing reference or the second timing reference to the return readout circuitry based on a control signal.

Example 23. The method of example 16, wherein the calibration phase is performed prior to normal operation of the TOF system and involves using first return readout circuitry to take the first time of flight measurement and second return readout circuitry to take the second time of flight measurement.

Although this disclosure has been described with a limited number of embodiments and examples, those skilled in the art, having the benefit of this disclosure, can envision other embodiments and examples that do not deviate from the disclosed scope. Furthermore, skilled persons can envision embodiments and examples that represent various combinations of the embodiments and examples disclosed herein made in various ways.

**Claims**

1. A time-of-flight (TOF) system, comprising:

    an array of vertical-cavity surface-emitting lasers (VCSELs);
    a VCSEL driver configured to drive the VCSEL array during operation to emit light toward a target;
    a reference single-photon avalanche diode (SPAD) array positioned to receive a reference light signal;
    a return SPAD array positioned to receive portions of the light emitted by the array of VCSELs that reflect off the target;
    reference readout circuitry configured to read out signals from the reference SPAD array;
    return readout circuitry configured to read out signals from the return array;
    a timing generator configured to generate a base timing reference;
    first buffer driver circuitry configured to buffer the base timing reference to produce a first timing reference;
    second buffer driver circuitry configured to buffer the first timing reference to produce a second timing reference;
    third buffer driver circuitry configured to buffer the base timing reference to produce a third timing reference to clock the return readout circuitry; and
    calibration circuitry configured to take a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

2. The TOF system of claim 1, wherein the calibration circuitry compensates for the offset between time of flight measurements taken by the return readout circuitry and the reference readout circuitry during normal operation as a function of the first time of flight measurement, the second time of flight measurement, a number of delay causing elements within the second buffer driver circuitry, and a difference between a number of delay causing elements within the first buffer driver circuitry and a number of delay causing elements within the third buffer driver circuitry.

3. The TOF system of claim 2, wherein the offset in making the time of flight measurements taken by the reference readout circuitry is compensated for as:

$$TOF = TOF1 - \frac{TOF2 - TOF1}{(N + M)/N}$$

where *TOF* is a time of flight measurement taken by the reference readout circuitry during normal operation, *TOF*1 is the first time of flight measurement, *TOF2* is the second time of flight measurement, *N* is the difference between the number of delay causing elements within the first buffer driver circuitry and the number of delay causing elements within the third buffer driver circuitry, and *M* is the number of delay causing elements within the second buffer driver circuitry.

4. The TOF system according to anyone of claims 2 or 3, wherein the calibration circuitry is configured to calculate the offset as a function of the difference between the second and first time of flight measurements and applies a scaling factor based on the number of delay causing elements within the second buffer driver circuitry relative to the difference in the number of delay causing elements within the first and third buffer driver circuitry.

5. The TOF system according to anyone of claims 1 to 4, taken in combination with claim 2, wherein the first buffer driver circuitry includes a different number of buffer elements than the second buffer driver circuitry, and the calibration circuitry is configured to use the delay introduced by the buffer elements in the second buffer driver circuitry, to determine the offset.

6. The TOF system according to anyone of claims 1 to 5, taken in combination with claim 2, wherein the timing generator is further configured to generate a trigger signal; further comprising fourth buffer driver circuitry configured to buffer the trigger signal to generate a drive signal for the VCSEL driver; and wherein:

   - the delay introduced by the buffer elements in the second buffer driver circuitry is used by the calibration circuitry to determine a delay between generation of the trigger signal and generation of the drive signal for the VCSEL driver; and/or
   - the calibration circuitry is further configured to determine a delay between generation of the trigger signal and generation of the drive signal for the VCSEL driver based on the first time of flight measurement and the second time of flight measurement.

7. The TOF system according to anyone of claims 1 to 6, wherein the calibration circuitry includes a multiplexer configured to selectively pass either the first timing reference or the second timing reference to the return readout circuitry based on a control signal from the calibration circuitry.

8. The TOF system according to anyone of claims 1 to 7, wherein the return readout circuitry includes first return readout circuitry used by the calibration circuitry to take the first time of flight measurement, and second return circuitry used by the calibration circuitry to take the second time of flight measurement, and wherein the calibration circuitry is further configured to perform the first and second time of flight measurements during a calibration phase that precedes normal operation of the TOF system.

9. A method for calibrating a time-of-flight (TOF) system in a calibration phase, the method comprising:

   emitting light toward a target;
   receiving a reference light signal at a reference array;
   receiving light that reflects off the target at a return array;

reading out the reference light signal using reference readout circuitry;

reading out signals from the return array using return readout circuitry;

generating a base timing reference with a timing generator;

applying a first time delay to the base timing reference to produce a first timing reference;

applying a second time delay to the first timing reference to produce a second timing reference;

applying a third time delay to the base timing reference to produce a third timing reference to clock the return readout circuitry;

taking a first time of flight measurement using the return readout circuitry when clocked by the first timing reference;

taking a second time of flight measurement using the return readout circuitry when clocked by the second timing reference; and

taking a first time of flight measurement using the return readout circuitry when the return readout circuitry is clocked by the first timing reference, take a second time of flight measurement using the return readout circuitry when the return readout circuitry is clocked by the second timing reference, and compensate for an offset between time of flight measurements taken by the return readout circuitry and the reference readout circuitry during normal operation based on at least the first time of flight measurement and the second time of flight measurement.

10. The method of claim 9, wherein the offset between time of flight measurements taken by the return readout circuitry and the reference readout circuitry is determined during normal operation as a function of the first time of flight measurement, the second time of flight measurement, a number of delay causing elements within second buffer driver circuitry that applies the second time delay, and a difference between a number of delay causing elements within first buffer driver circuitry that applies the first time delay and a number of delay causing elements within third buffer driver circuitry that applies the third time delay.

11. The method of claim 10, further comprising compensating for the offset in time of flight measurements taken by the reference readout circuitry during normal operation as:

$$TOF = TOF1 - \frac{TOF2 - TOF1}{(N + M)/N}$$

where *TOF* represents a time of flight measurement taken by the reference readout circuitry during normal operation, *TOF1* is the first time of flight measurement, *TOF2* is the second time of flight measurement, *N* is the difference between the number of delay causing elements within the first buffer driver circuitry and the third buffer driver circuitry, and *M* is the number of delay causing elements within the second buffer driver circuitry.

12. The method according to anyone of claims 10 or 11, wherein calculating the offset includes applying a scaling factor based on the number of delay causing elements within the second buffer driver circuitry relative to the difference in the number of delay causing elements within the first and third buffer driver circuitries.

13. The method according to anyone of claims 9 to 12 taken in combination with claim 10, wherein the first buffer driver circuitry includes a different number of buffer elements than the second buffer driver circuitry, and the method further comprises utilizing the delay introduced by the buffer elements in the second buffer driver circuitry to determine the offset.

14. The method according to anyone of claims 9 to 13 taken in combination with claim 10, further comprising generating a trigger signal with the timing generator and buffering the trigger signal with fourth buffer driver circuitry to generate a drive signal for a VCSEL driver that drives an array of VCSELs to emit light toward the target, wherein:

- the delay introduced by the buffer elements in the second buffer driver circuitry is used to determine a delay between the generation of the trigger signal and the drive signal for the VCSEL driver; and/or
- the first time of flight measurement and the second time of flight measurement are used to determine a delay between generation of the trigger signal and generation of the drive signal for the VCSEL driver.

15. The method according to anyone of claims 9 to 14, wherein the calibration phase includes using a multiplexer to selectively pass either the first timing reference or the second timing reference to the return readout circuitry based on a control signal.

**16.** The method according to anyone of claims 9 to 15, wherein the calibration phase is performed prior to normal operation of the TOF system and involves using first return readout circuitry to take the first time of flight measurement and second return readout circuitry to take the second time of flight measurement.

**FIG. 1**
**(Prior Art)**

**FIG. 2**

**FIG. 3**

EP 4 603 869 A1

Europäisches
Patentamt
European
Patent Office
Office européen
des brevets

## EUROPEAN SEARCH REPORT

**Application Number**

EP 25 15 6730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/379095 A1 (KAPPEL ROBERT [AT] ET AL) 3 December 2020 (2020-12-03) * paragraphs [0071] - [0074], [0084] - [0097], [0163]; figures 1,2,14 * ----- | 1-16 | INV. G01S7/481 G01S7/484 G01S7/4863 G01S7/4865 |
| Y | US 2016/363654 A1 (WYLAND DAVID [US]) 15 December 2016 (2016-12-15) * paragraphs [0012] - [0036]; figure 1 * ----- | 1-16 | G01S7/497 G01S17/10 G01S17/894 |

**TECHNICAL FIELDS SEARCHED     (IPC)**

G01S

The present search report has been drawn up for all claims

| Place of search | Date of completion of the search | Examiner |
|---|---|---|
| Munich | 3 June 2025 | Theißing, Nikolaus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 6730

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| US 2020379095 A1 | 03-12-2020 | CN | 112005128 A | 27-11-2020 |
| | | EP | 3521856 A1 | 07-08-2019 |
| | | US | 2020379095 A1 | 03-12-2020 |
| | | WO | 2019149735 A1 | 08-08-2019 |
| US 2016363654 A1 | 15-12-2016 | CN | 107820572 A | 20-03-2018 |
| | | EP | 3308193 A1 | 18-04-2018 |
| | | US | 2016363654 A1 | 15-12-2016 |
| | | WO | 2016204992 A1 | 22-12-2016 |

EPO FORM P0459

For more details about this annex : see Official Journal of the European Patent Office, No. 12/82